# EUROPEAN PATENT APPLICATION

(11) **EP 3 536 922 A1**
(43) Date of publication of application: **11.09.2019**
(21) Application number: 18305230.7
(22) Date of filing: 05.03.2018
(51) Int. Cl.: F02B 19/10, F02B 19/12, F02B 19/16

(54) **PRECHAMBER DEVICE FOR COMBUSTION ENGINE**

(71) Applicant: Innio Jenbacher GmbH & Co OG, 6200 Jenbach (AT)
(72) Inventor: LEROUX, Clément, 6200 JENBACH (AT); BEC, Isabelle Louise Rachel, 6200 JENBACH (AT); LABOLANI, Michèle, 6200 JENBACH (AT); LAIMINGER, Stephan, 6200 JENBACH (AT); SAKOTNIG, Alexander, 6200 JENBACH (AT)
(74) Representative: Torggler & Hofinger Patentanwälte

(57) **Abstract**

Disclosed is a prechamber device (1) for a combustion engine. The prechamber device comprises a prechamber body (13) circumferentially enclosing a prechamber cavity (12), a nozzle body (14) extending from the prechamber body and disposed at a first axial end of the prechamber device, wherein an interior of the nozzle body is in fluid communication with and provides an appendix of the prechamber cavity (12). The prechamber body and the nozzle body are provided as a wall comprising an inner surface (16) and an outer surface (17) and comprise a first material. A core member (18) of a second material is enclosed inside the wall between the inner surface and the outer surface and axially extending inside the nozzle body (14), enclosed by the first material.

## Description

### TECHNICAL FIELD

The present disclosure relates to a prechamber device for a combustion engine as set forth in the claims. It further relates to a cylinder head and a reciprocating engine as further set forth in the claims, and to methods of manufacturing a prechamber device.

### BACKGROUND OF THE DISCLOSURE

Certain types of internal combustion engines, in particular reciprocating internal combustion engines, are equipped with prechambers which facilitate fast and complete ignition of a fuel-oxidizer mixture provided in a combustion chamber. In a prechamber cavity, a partial cavity of the fuel-oxidizer mixture is ignited by an ignition source, such as, for instance, a spark plug. The prechamber device, which encloses the prechamber cavity, comprises nozzle openings at one axial tip of the prechamber device, through which jets of burning mixture and/or hot combustion products and/or plasma are emitted into the main combustion chamber, which deeply penetrate into the main combustion chamber and cause a fast and complete ignition of the fuel-oxidizer mixture provided in the main combustion chamber. Efficiency, for instance of reciprocating engines, is thus improved, and emission control may be facilitated.

As is well-known to the person having ordinary skill in the art, such prechamber devices are commonly provided in the cylinder head of reciprocating engines. In embodiments, one prechamber device may be provided per cylinder.

As will be readily appreciated, the prechamber devices are subjected to significant thermal loads. US 2013/0139784 proposes to provide a prechamber device as a kind of sandwich construction, in which a support structure is provided which is made from a material having a relatively higher mechanical strength and a relatively lower thermal conductivity, and members of a material having a relatively lower mechanical strength and a relatively higher thermal conductivity are embedded within the support structure. According to the teaching of US 2013/0139784, the material having the higher thermal conductivity is constitutes part of the surface of the prechamber device. It is thus subject to external influences, as for instance contact with cooling fluid, and thus for instance corrosion behavior if this material must be considered. A sufficient mechanical strength for the intended use is a further prerequisite. The choice of material and/or operating conditions under which the prechamber device is suitable are thus restricted. US 2016/0333771 discloses a prechamber device extending from a first axial end to a second axial end along an axial direction, the prechamber device comprises a prechamber body circumferentially enclosing a prechamber cavity. A nozzle body extends from the prechamber body at a first axial end of the prechamber device, wherein an interior of the nozzle body is in fluid communication with and provides an appendix of the prechamber cavity. Nozzle openings are provided through the nozzle body from the interior to the exterior of the nozzle body. The prechamber device is equipped with cooling passages. In embodiments, the cooling channels are closed and filled with a material having a high thermal conductivity when compared to a surrounding structural material of the prechamber device. In other embodiments, said cooling passages include a liquid so as to form heat pipes. The cooling passages disclosed in US 2016/0333771 are relatively long and thin structures, predominantly extending in an axial direction of the prechamber device. Heat transfer and temperature homogenization thus are mainly achieved in an axial direction of the prechamber device, while the cooling passages are discretely distributed around the circumference of the prechamber device.

### OUTLINE OF THE SUBJECT MATTER OF THE PRESENT DISCLOSURE

It is an object of the present disclosure to propose a device of the type initially mentioned, and a method for manufacturing said device. In a more specific aspect, an improved device of the type initially mentioned shall be disclosed. In a further, more specific, aspect, a prechamber device comprising means to support heat transfer away from the thermally highly loaded nozzle body and tip of the nozzle body shall be disclosed. In another aspect, it is an objective of the present disclosure to provide a device of the type initially mentioned suitable to provide a more homogeneous temperature distribution in particular of the nozzle body. That is, spatial temperature gradients in the nozzle body shall be reduced, or limited, respectively, related to axial as well as to circumferential temperature gradients.

This is achieved by the subject matter described in claim 1.

Further effects and benefits of the disclosed subject matter, whether explicitly mentioned or not, will become apparent in view of the disclosure provided below.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of".

Accordingly, disclosed is a prechamber device for a combustion engine, the prechamber device extending from a first axial end to a second axial end along an axial direction. The prechamber device comprises a prechamber body circumferentially enclosing a prechamber cavity, and a nozzle body extending from the prechamber body and disposed at a first axial end of the prechamber device as an appendix of the prechamber body. It is understood that the prechamber body and the nozzle body may be provided integrally with each other, such that the prechamber device is provided as an integral one-piece device. An interior of the nozzle body is in fluid communication with and provides an appendix of the prechamber cavity. Nozzle openings are provided through the nozzle body from an interior to an exterior of the nozzle body. The prechamber body and the nozzle body are provided as a wall, wherein, as noted above, they may be provided as one integral one-piece wall. The wall circumscribes the prechamber cavity and the interior of the nozzle body. The interior of the nozzle body may be understood as an appendix and a part of the prechamber cavity. The wall comprises an inner surface and an outer surface. The inner and outer surfaces in particular extend circumferentially. The inner surface is provided adjacent and circumscribing the interior of the prechamber device, i.e. the prechamber cavity inclusive of the appendix formed inside the nozzle body. It is understood that the outer surface is provided opposite the inner surface across the wall. The prechamber body and the nozzle body comprise, or are made of, respectively, a first material. Said first material forms the inner surface and the outer surface of the wall. A core member comprising, or being made of, respectively, a second material is enclosed inside the wall between the inner surface and the outer surface. It is understood that the core member is enclosed inside the wall and not by the wall. Hence, it may in particular be hermetically enclosed inside the wall. That is, the surface of the core member may be at least essentially be entirely covered by the first material forming the wall. The core member is provided axially extending inside the nozzle body wall, and enclosed by the first material. The core member comprises at least one cross section integrally spanning a circumference of the prechamber device. Due to the fact that the core member comprising the second material is completely enclosed inside the wall, and external surface of the prechamber device is formed exclusively by the first material. According to another point of view, no external surface is formed by the second material. The second material thus is not subjected to erosion or corrosion from, for instance, combustion gases or coolant.

Generally, an axial end of the prechamber device opposite the nozzle body may be equipped with a means to receive and attach an ignition device. For instance, a female thread extending into the prechamber cavity and provided and configured to receive an ignition device, as for instance a spark plug, may be provided.

The first material may be chosen to have or to exhibit a first thermal conductivity and the second material be chosen to have or to exhibit a second thermal conductivity, wherein in particular the second thermal conductivity may be larger than, or exceed, the first thermal conductivity.

The first material may be chosen to have or to exhibit first mechanical strength parameters and the second material may be chosen to have or to exhibit second mechanical strength parameters, wherein in particular at least one first mechanical strength parameter exceeds the corresponding second mechanical strength parameter. The mechanical strength parameters may comprise, while not being limited to, at least one of the modulus of elasticity, breaking strength, hardness, resistance to impact, modulus of elasticity, yield strength, ultimate tensile strength, fatigue strength and/or creep resistance.

The first material may be chosen to have or to exhibit a first melting point and the second material may be chosen to have or to exhibit a second melting point, wherein in particular the second melting point is lower than the first melting point.

The first material may be chosen to have or to exhibit a first corrosion and/or erosion resistance and the second material may be chosen to have or to exhibit a second corrosion and/or erosion resistance, wherein in particular the second corrosion and/or erosion resistance is lower than the first corrosion and/or erosion resistance. It may be said, in this respect, that generally the first material exhibits a higher resistance against chemical and physical wear and abrasion and/or erosion than the second material.

In certain embodiments, the core member, or the axial extent of the core member, respectively, may be restricted to the nozzle body, such that the core member extends exclusively inside the nozzle body. In other embodiments, however, the core member may axially extend through at least a part of the nozzle body and a part of the prechamber body.

In certain embodiments the core member may be shaped as a conduit enclosed by a solid, continuous, wall, in particular have a circumferentially closed shell surface. In even more specific embodiments, the core member may assume the shape, or a shape resembling, a hollow cylinder, a hollow conical frustum, and the like. In other embodiments, however, the core member may exhibit a perforated or pierced or interrupted shell surface. The core member may for instance be shaped as one of a crown and a cage.

In certain exemplary embodiments of a prechamber device as herein disclosed the second material of which the core member is made or consists may be chosen to have or to exhibit a melting point sufficiently low so as to liquify during operation of the prechamber device. The skilled person will readily appreciate that a prechamber device, when operating in an engine, will operate, except for cold start conditions, in a typical temperature window, and in any case above a certain threshold temperature. By virtue of this consideration, the above statement provides a clear and unmistakable teaching to a person having skill in the art. That is, during operation the core member is present as a liquid enclosed inside the wall of the prechamber device. The core member may then transfer heat in a manner similar to a heat pipe. With the further prerequisite that the prechamber device is installed in an engine such that the nozzle body is arranged gravitationally lower than the prechamber body, which in many applications is the case, heat transfer from the nozzle body to the prechamber body and further from the prechamber body to a cylinder head, is supported by natural convection inside the cavity occupied by the core member. "Gravitationally lower" shall be broadly understood as relating any acceleration field or field of gravity, as for instance on earth, where it actually means "lower", but also related to a gravitational field which is caused by centrifugal forces. Generally, an entity being arranged gravitationally lower than a second entity shall be construed to mean the entity being displaced relative to the second entity in the direction in which the gravitational - including centrifugal - acceleration and forces act.
It may further be beneficial to choose the material from which the core member is made to have or exhibit a melting point sufficiently high in order to facilitate handling of the core member during manufacturing. That is, the material may be chosen such that the core member is solid at the typical room temperature interval, say below 50°C, and further the material may be chosen to have or exhibit a melting point above 100°C, above 200°C, or above 300°C. As mentioned above, the material may be chosen such as to liquefy at typical operation conditions.

In other aspects of the present disclosure, methods for manufacturing a prechamber device as described above are disclosed. Generally, the prechamber device as herein described may particularly easy be manufactured in applying an additive manufacturing method. An additive manufacturing method shall in particular be understood as a method essentially resembling 3D printing. By way of example, while in no way limiting, these methods may include so-called Selective Laser Melting SLM, Electron Beam Melting EBM, Direct Metal Laser Melting DMLM and Laser Powder Forming LPF. In a more specific aspect, the method comprises providing a solid core member of the second material and disposing the first material around the core member by an additive manufacturing method. In a further more specific aspect, the method may comprise manufacturing the prechamber device by an additive manufacturing method, wherein the material disposed for the additive manufacturing method is changed during the manufacturing process, so that the first material, from which the wall of the prechamber device shall be manufactured, is disposed and fused at first locations, while the second material, from which the core member shall be manufactured, is disposed and fused at second locations.

Further disclosed are a cylinder head comprising a prechamber device of the type disclosed above, and a reciprocating engine comprising a cylinder head which in turn comprises a prechamber device of the type disclosed above.

It is understood that the features and embodiments disclosed above may be combined with each other. It will further be appreciated that further embodiments are conceivable within the scope of the present disclosure and the claimed subject matter which are obvious and apparent to the skilled person.

### BRIEF DESCRIPTION OF THE DRAWINGS

The subject matter of the present disclosure is now to be explained in more detail by means of selected exemplary embodiments shown in the accompanying drawings. The figures show
- Fig. 1: a sectional view of a first exemplary embodiment of a prechamber device of the type herein disclosed; and
- Fig. 2: a sectional view of a second exemplary embodiment of a prechamber device of the type herein disclosed.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### EXEMPLARY MODES OF CARRYING OUT THE TEACHING OF THE PRESENT DISCLOSURE

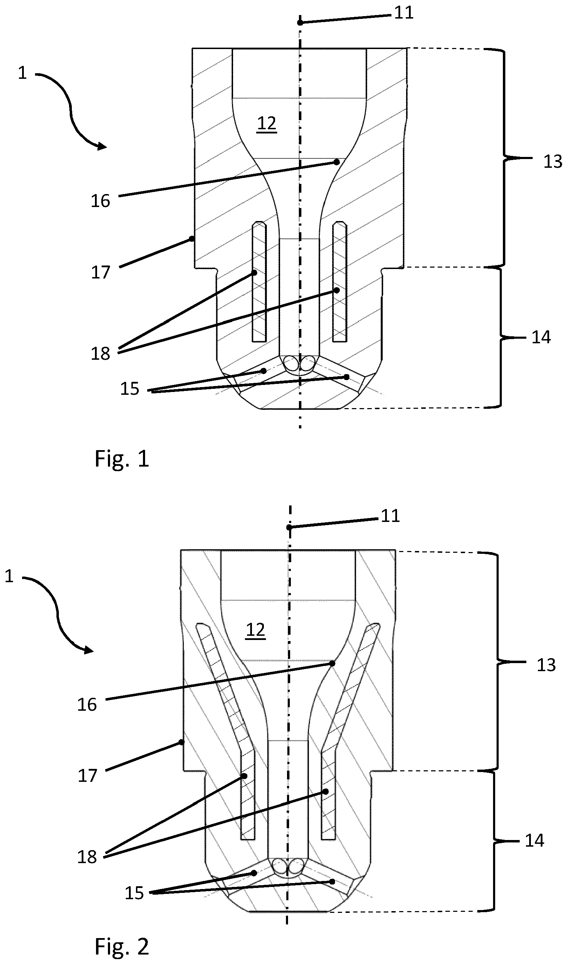

Figure 1 shows, in a sectional view, a first exemplary embodiment of a prechamber device according to the teaching of the present disclosure. Prechamber device 1 comprises prechamber body 13 and nozzle body 14 extending from prechamber body 13 and being disposed at one axial end of the prechamber device. An axis of the prechamber device is denoted at 11. A prechamber cavity 12 is formed inside the prechamber device and extends axially into the nozzle body, forming an interior of the nozzle body. Nozzle openings 15 are provided in nozzle body 14, and provide fluid communication between the interior of the nozzle body and an exterior of the nozzle body. Prechamber cavity 12 is delimited circumferentially, and at a nozzle-sided axial end, by a wall. It is noted that prechamber device 1 is open at an axial end opposed the nozzle body, so as to receive an ignition device, such as a spark plug, in prechamber cavity 12. The wall delimiting prechamber cavity 12 comprises inner surface 16 adjacent prechamber cavity 12, and outer surface 17. The wall is made from a first material. This first material forms the inner and outer surface, and generally forms the entire external surface of the wall, or of prechamber device 1, respectively. A core member 18 is provided and enclosed inside the wall. Core member 18 is hermetically enclosed inside the wall. Core member 18 is disposed between inner surface 16 and outer surface 17 of the wall, wherein inner surface 16 and outer surface 17 are formed by a first material. Core member 18 comprises, or is made from, respectively, a second material different from the first material from which the wall and the inner and outer surfaces are formed. Core member 18 has no external surface and is entirely enclosed by first material. Core member 18 extends circumferentially, and in particular integrally, uninterrupted, around the entire circumferential extent of prechamber device 1. In the exemplary embodiment shown in figure 1, core member 18 may be a hollow cylinder. Core member 18 may for non-limiting instances be made from aluminum or copper as the second material, having a relatively high heat conductivity and a relatively low mechanical strength. The wall in which core member 18 is enclosed may be made from any material yielding a comparatively higher mechanical strength, in particular at elevated temperatures, and a comparatively lower heat conductivity. Thus, the mechanically weaker core member is firmly enclosed and supported inside a mechanically stronger wall, and thus does not, or only insignificantly, bear mechanical load. It is further entirely protected from any chemical or physical corrosive and/or abrasive influences. On the other hand, it serves to intensify heat conduction inside prechamber device 1, thus to reduce temperature gradients occurring during operation, reduce thermally induced stresses, and in turn thus supports mechanical integrity of the prechamber device. As the skilled person will readily appreciate, during operation of a prechamber device heat intake into the material of the prechamber device is elevated at the nozzle body, and at the tip of the nozzle body, and further occurs from inner surface 16. This is caused by combustion inside prechamber cavity 12 and hot gases and plasma being ejected through nozzle openings 15, thus intensifying heat intake into the material surrounding the nozzle openings, and further heat intake from the combustion chamber of the engine at the tip of nozzle body 14. On the other hand, outer surface 17 of prechamber body 13 is received in a cooled cylinder head. Thus, temperature gradients result, with the temperature decreasing from the tip of nozzle body 14 to the prechamber body 13 in an axial direction on the one hand, and from inner surface 16 to outer surface 17 in a radial direction on the other hand. Core member 18, comprising a material of a comparatively higher heat conductivity than the material of the surrounding wall, intensifies heat conduction, or reduces the temperature gradient required to drive a certain heat flux, respectively. As a result, the temperature gradients, and along with that, thermally induced stresses, are reduced, also in the wall. In that core member 18 extends axially on the one hand and spans the circumference of prechamber device 1 on the other hand, axial temperature gradients are reduced, and circumferential temperature gradients are reduced if not avoided. It is noted that core member 18 may in particular be circumferentially closed, or exhibit at least one cross-section in which it is circumferentially closed, so as to further support evening out the temperature distribution along the circumference of prechamber device 1.

In a second exemplary embodiment shown in figure 2, core member 18 exhibits a significantly larger axial extent than in the embodiment of figure 1. Core member 18, in this illustrative and exemplary embodiment, extends from inside nozzle body 14 far into prechamber body 13. In order to enable this, in particular around the tapering section of prechamber cavity 12, core member 18 is essentially funnel-shaped, with a frustoconical section inside prechamber body 13 and surrounding the tapering section of prechamber cavity 12, and a cylindrical section extending into nozzle body 14. The skilled person will appreciate that the enlarged core member in the embodiment of figure 2 further intensifies heat conduction inside prechamber device 1. The skilled person will by standard calculations of the heat transfer and temperature distribution for the operation of a prechamber device in a specific engine or cylinder head readily determine an optimum size and shape of core member 18.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

## Claims

1. A prechamber device (1) for a combustion engine, the prechamber device extending from a first axial end to a second axial end along an axial direction,
the prechamber device comprising a prechamber body (13) circumferentially enclosing a prechamber cavity (12),
a nozzle body (14) extending from the prechamber body and disposed at a first axial end of the prechamber device as an appendix of the prechamber body, wherein an interior of the nozzle body is in fluid communication with and provides an appendix of the prechamber cavity (12), and nozzle openings (15) being provided through the nozzle body from the interior to the exterior of the nozzle body,
wherein the prechamber body and the nozzle body are provided as a wall comprising an inner surface (16) and an outer surface (17),
wherein the prechamber body and the nozzle body comprise a first material forming the inner surface and the outer surface of the wall, and a core member (18) of a second material is enclosed inside the wall between the inner surface and the outer surface and axially extending inside the nozzle body (14) wall, and enclosed by the first material,
**characterized in that** the core member (18) comprises at least one cross section integrally spanning a circumference of the prechamber device.

2. The prechamber device according to the preceding claim, wherein the first material has a first thermal conductivity and the second material has a second thermal conductivity, **characterized in that** the second thermal conductivity is larger than the first thermal conductivity.

3. The prechamber device according to any preceding claim, wherein the first material has first mechanical strength parameters and the second material has second mechanical strength parameters, **characterized in that** at least one first mechanical strength parameter exceeds the corresponding second mechanical strength parameter.

4. The prechamber device according to any of the preceding claims, wherein the first material has a first melting point and the second material has a second melting point, **characterized in that** the second melting point is lower than the first melting point.

5. The prechamber device according to any of the preceding claims, wherein the first material has a first corrosion and/or erosion resistance and the second material has a second corrosion and/or erosion resistance, **characterized in that** the second corrosion and/or erosion resistance is lower than the first corrosion and/or erosion resistance.

6. The prechamber device according to any of the preceding claims,
**characterized in that** the core member (18) is restricted to the nozzle body (14).

7. The prechamber device according to any of claims 1 through 5,
**characterized in that** the core member (18) axially extends through at least a part of the nozzle body (14) and a part of the prechamber body (13).

8. The prechamber device according to any of the preceding claims,
**characterized in that** the core member (18) is shaped as a conduit enclosed by a solid wall.

9. The prechamber device according to any of claims 1 through 7,
**characterized in that** the core member (18) is shaped as one of a crown and a cage.

10. The prechamber device according to any of the preceding claims,
**characterized in that** the second material is chosen with a melting point sufficiently low so as to liquify during operation of the prechamber device.

11. A method of manufacturing a prechamber device according to any of the preceding claims, **characterized in** providing a solid core member (18) of the second material and disposing the first material around the core member by an additive manufacturing method.

12. A method of manufacturing a prechamber device according to any of the precedings claims claiming a prechamber device, wherein the prechamber device is manufactured applying an additive manufacturing method, **characterized in that** the core member (18) in manufactured in changing the material disposed for the additive manufacturing method during the manufacturing process.

13. A cylinder head, **characterized in** comprising a prechamber device (1) according to any of the preceding claims.

14. A reciprocating engine comprising a cylinder head according to the preceding claim.
